# EUROPÄISCHE PATENTANMELDUNG

(11) **EP 1 643 148 A2**
(43) Veröffentlichungstag der Anmeldung: **05.04.2006**
(21) Anmeldenummer: 05014043.3
(22) Anmeldetag: 29.06.2005
(51) Int. Cl.: F16D 25/0638, F16D 25/12, F16D 13/64

(54) **Vorrichtung zum Wirkverbinden eines Verbrennungsmotors mit einem Getriebe**

(30) Priorität: 22.07.2004 US 590119 P
(71) Anmelder: LuK Lamellen und Kupplungsbau Beteiligungs KG, 77815 Bühl (DE)
(72) Erfinder: George, Philip, OH 44691 Wooster (US); Izso, Gabor, 44691 Wooster (US); Hemphill, Jeffrey, 44321 Copley (US); Lindemann, Patrick, OH 44691 Wooster (US); Sturgin, Todd, OH 44676 Shreve (US); Schrader, Scott, OH 44718 Canton (US); McGrath, Marc, 1125 Strasburg Ohio 44680 (US); Avins, David, OH 44214 Burbank (US); Olsen, Steven, OH 44691 Wooster (US)
(74) Vertreter: Duschl, Edgar Johannes

(57) **Zusammenfassung**

Die Erfindung betrifft eine Vorrichtung zum Herstellen einer Wirkverbindung zwischen einem Verbrennungsmotor eines Kraftfahrzeuges und einem nachfolgenden Getriebe. Die Vorrichtung stellt ein Substitut für einen Drehmomentwandler dar und kann als Nasskupplung oder Torsionsdämpfer ausgestaltet sein. Der Bauraum zwischen dem Verbrennungsmotor und dem Getriebe muss hierfür nicht umkonstruiert werden. Durch den Einbau der erfindungsgemäßen Vorrichtung muss lediglich ein Austausch der Getriebe/Motor-Steuerungs-Software vorgenommen werden.

## Beschreibung

Die Erfindung betrifft eine Vorrichtung zum Aufbau eines Kraftflusses zwischen einem Verbrennungsmotor und einem Getriebe. Hierbei ist ein Lamellenpaket von Bedeutung, welches in einem geschlossenen Gehäuse angeordnet ist. In dem Gehäuse ist außerdem ein ÖIfluss angeordnet. Weiterhin betrifft die Erfindung Kühlnuten in der Oberfläche der Reiblamellen.

Aus dem Stand der Technik ist bekannt, dass zwischen einem Verbrennungsmotor und einem nachfolgenden Getriebe - vorzugsweise einem Automatikgetriebe - ein Drehmomentwandler angeordnet ist. Dieser Drehmomentwandler besteht aus einem äußeren Gehäuse, welches im Wesentlichen aus zwei Gehäuseschalen besteht. Die eine Gehäuseschale ist indirekt mit der Antriebswelle/ Kurbelwelle des Verbrennungsmotors drehfest verbunden. Die zweite Gehäuseschale ist dem nachfolgenden Getriebe zugewandt. Beide Schalen sind an ihrer Stoßstelle öldicht - vorzugsweise mittels Schweißen - miteinander verbunden. In der getriebeseitigen Schale sind Pumpenschaufeln angeordnet. Durch die Drehbewegung des Drehmomentwandlers und weil das Gehäuseinnere mit Öl erfüllt ist, kommt es zu einer Torordial-Strömung. Diese Strömung wirkt auf eine Turbine, die ebenfalls mit einer entsprechenden Beschaufelung versehen ist. Dadurch kommt es zu einer Drehbewegung der Turbine. Im radial inneren Bereich zwischen der Turbine und der Pumpe ist ein Leitrad angeordnet, welches den Ölstrom in geeigneter Weise wieder der Pumpe zuführt.

Da zwischen der Pumpe und der Turbine immer ein Schlupf vorhanden ist und dieser Schlupf zu einem erheblichen Wirkungsgradverlust führt, werden Drehmomentwandler seit Jahrzehnten mit einer Wandlerüberbrückungskupplung ausgestattet. Diese Wandlerüberbrückungskupplung stellt im geschlossenen Zustand eine drehfeste Verbindung zwischen dem Gehäuse und der Getriebe-Eingangswelle dar. In dem Kraftfluss von dem Verbrennungsmotor über den Drehmomentwandler hin zur Getriebe-Eingangswelle ist zur Minimierung von Drehungleichförmigkeiten oftmals auch noch ein Dämpfer angeordnet. Dieser Dämpfer kann hierbei als so genannter Turbinendämpfer oder auch als reiner Torsionsdämpfer aufgebaut sein.

Ein Drehmomentwandler ist somit ein sehr aufwendiges und komplexes Bauelement, weshalb er auch teuer ist.

Es ist deshalb Aufgabe der Erfindung, eine Vorrichtung zum Wirkverbinden eines Verbrennungsmotors mit einem nachfolgenden Getriebe zu finden, die eine kostengünstigere Lösung darstellt.

Die Aufgabe wird durch die Merkmale des Anspruches 1 gelöst. Durch diese Lösung ist es sogar möglich, dass der Bauraum zwischen Verbrennungsmotor und Getriebe unverändert bleiben kann, das heißt, dass eine bestehende Konstruktion, die mit einem Drehmomentwandler realisiert wurde, beibehalten werden kann, nur dass anstelle des Drehmomentwandlers nun die erfindungsgemäße Vorrichtung eingesetzt wird.

Erfindungsgemäß wird zur Anpassung der Motordrehzahlen zu den Drehzahlen der Getriebe-Eingangswelle, kurzzeitig mit einem Schlupf zwischen den Lamellen des Lamellenpakets gefahren. Die hierbei anfallende Wärmeentwicklung wird durch eine Ölkühlung abgeführt. Hierbei ist es wiederum vorteilhaft, wenn die erfinderische Vorrichtung als Substitut für einen Drehmomentwandler eingesetzt wird, da auch bei einem Drehmomentwandler eine erhebliche Wärmeentwicklung stattfindet und dadurch auch für ihn eine externe Ölförderpumpe vorhanden ist, die für einen ständigen Ölaustausch in dem Wandler sorgt. Das erhitzte Öl wird hierbei einem Ölkühler zugeführt, um danach wieder zum Wandler - zumindest teilweise - gefördert zu werden. Deshalb kann die erfindungsgemäße Vorrichtung - ähnlich wie bei einem Drehmomentwandler - mit einem Pumpenhals versehen sein, der in eine getriebeseitige Ölförderpumpe eingreift. In einer weiteren Ausgestaltung der Erfindung ist aber kein Pumpenhals erforderlich, da hier die Ölförderpumpe Motordrehzahl unabhängig - beispielsweise mittels einer elektromotorisch betriebenen - Ölförderpumpe bewerkstelligt wird. In einem Sonderfall dieser Lösung kann die Motordrehzahl unabhängige Fördermenge der Ölpumpe in Abhängigkeit von der Öltemperatur betrieben werden, mit der das ÖI aus der erfindungsgemäßen Vorrichtung austritt.

Die drehfeste Ankopplung der erfindungsgemäßen Vorrichtung zum Verbrennungsmotor kann mittels eines Schwungrades erfolgen, wobei das Schwungrad drehfest auf der Antriebswelle/Kurbelwelle des Verbrennungsmotors angebracht ist und die Vorrichtung dann an diesem Schwungrad - ebenfalls drehfest - fixiert ist. Die Ankopplung kann aber auch mittels einer fiexiblen Scheibe (also eine Scheibe mit einer geringen Eigenmasse) erfolgen. Eine derartige flexible Scheibe wird in der Fachwelt häufig auch "Flex-Plate" genannt.

Die erfindungsgemäße Vorrichtung weist im Wesentlichen zwei Haupt-Ausgestaltungen auf. In einer ersten Ausgestaltung stellt sie eine Nasskupplung dar. In einer zweiten Ausgestaltung verkörpert sie einen Torsionsdämpfer. Diese Unterschiede werden in Verbindung mit der Figurenbeschreibung noch weiter ausgeführt.

Nachfolgend soll die Erfindung anhand der Figurenbeschreibung weiter erläutert werden. Es zeigen:
- Figur 1: einen Querschnitt durch eine erfindungsgemäße Nasskupplung mit einem radial außen angeordneten Dämpfer und zwei Schöpfvorrichtungen;
- Figur 2: zwei Ölkreisläufe zur der Figur 1;
- Figur 3: einen Ölring zu den Figuren 1 und 2;
- Figur 4: eine weitere Ausgestaltung zu den Figuren 1 bis 3 mit einem Scheibenpaar als Öl-Rückführeinrichtung;
- Figur 5: eine weitere erfindungsgemäße Nasskupplung mit einem Dämpfer im mittleren Durchmesserbereich;
- Figur 6: eine perspektivische Schnittdarstellung zu Figur 5;
- Figur 7: einen erfindungsgemäßen Torsionsdämpfer;
- Figur 8: eine Vorderansicht einer Reiblamelle;
- Figur 9: eine Teilansicht Z aus der Figur 8.

Zunächst eine Vorbemerkung: Da in den Figuren überwiegend rotationssymmetrische Bauteile gezeigt werden, entstehen so genannte "umlaufende" Kanten. Da diese Kanten aber die Übersichtlichkeit der Zeichnungen deutlich beeinträchtigen würden, sind sie weitestgehend weggelassen worden.

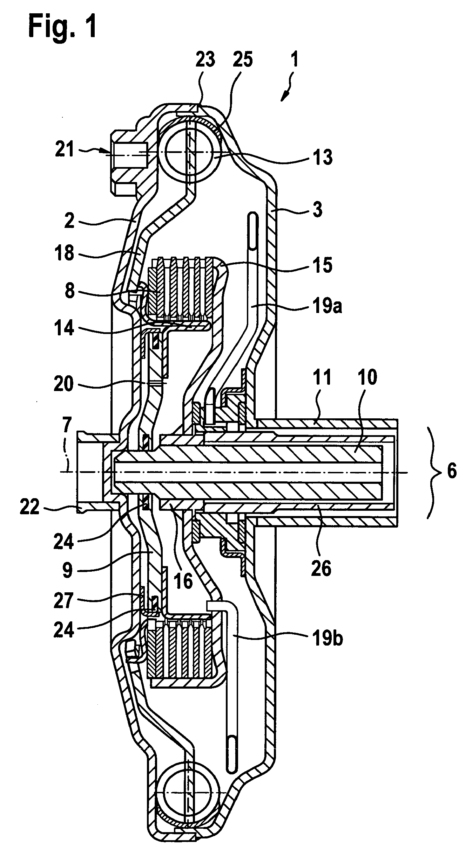

In der Figur 1 ist eine erfindungsgemäße Vorrichtung zu sehen, die als Nasskupplung ausgebildet ist. Diese Nasskupplung wird von einem Gehäuse 1 umhüllt. Das Gehäuse 1 besteht im Wesentlichen aus einer motorseitigen Gehäuseschale 2 und einer getriebeseitigen Gehäuseschale 3. Die Schalen 2 und 3 sind mit einer Schweißnaht 23 verbunden. Mittels mehrerer Befestigungsaugen 21 (hier nur eine dargestellt) ist das Gehäuse 1 mit einer hier nicht dargestellten Antriebsscheibe 4 (Schwungrad, Flex-Plate, Zweimassenschwungrad) mit einer ebenfalls hier nicht dargestellten Antriebswelle/ Kurbelwelle 5 drehfest verbunden. Mittels einer Führungseinrichtung 22 wird das Gehäuse 1 in einer konzentrischen Ausnehmung der Antriebswelle/ Kurbelwelle 5 geführt. Die getriebeseitige Gehäuseschale 3 ist im Bereich einer konzentrischen Öffnung 6 mit einem Pumpenhals 11 drehfest verbunden. Dieser Pumpenhals 11 greift in eine hier nicht dargestellte Ölförderpumpe 12 ein. Durch die Drehbewegung des Gehäuses 1 um eine Rotationsachse 7 wird dadurch die Ölförderpumpe 12 angetrieben.

Die dargestellt Nasskupplung ist mit einem Dämpfer versehen. Der hier dargestellte Dämpfer ist im radial äußeren Bereich der Nasskupplung angeordnet. Nicht dargestellte Mitnehmer (beispielsweise eingestanzte Nocken in dem Gehäuse 1) liegen an dem einen Ende von Dämpferfedern 13 an. Die Dämpferfedern 13 sind hier als gebogene Wendelfedern ausgebildet, die in einer Gleitrinne 25 anliegen. Das andere Ende der Federn 13 wirkt auf ein Ausgangsteil 18, welches wiederum mit einem ersten Lamellenträger 14 verzahnt ist. Zwischen diesem ersten Lamellenträger 14 und einem zweiten Lamellenträger 15 sind Lamellen (Reiblamellen) 8 angeordnet. Die Lamellen 8 sind alternierend entweder mit dem Lamellenträger 14 oder 15 verzahnt verbunden und weisen dadurch eine axiale Verschiebbarkeit. Der Lamellenträger 15 ist drehfest mit einer Nabe 16 verbunden. Die Nabe 16 verfügt über ein nicht dargestelltes Vielzahnprofil, welches komplementär zu dem Vielzahnprofil der Getriebe-Eingangswelle 10 ist.

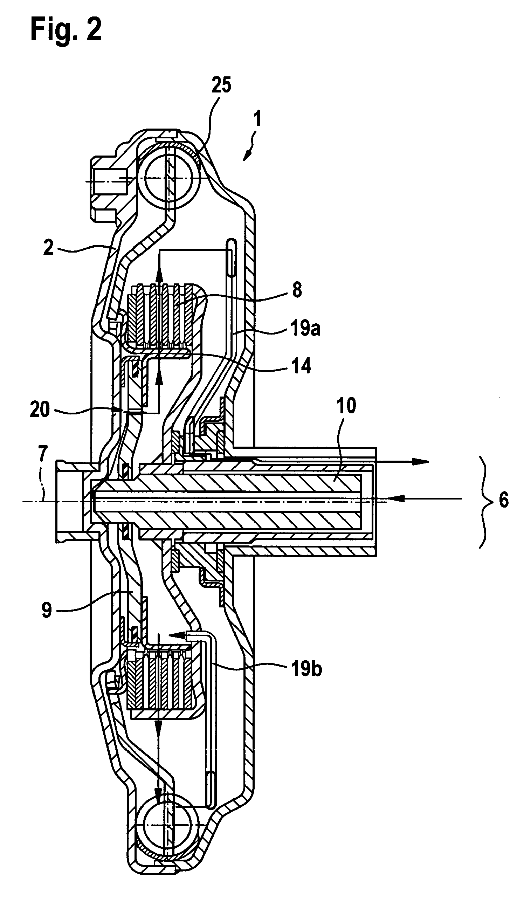

Wie der Figur 1 zu entnehmen ist, ist die Getriebe-Eingangswelle 10 durchbohrt. Durch diese Bohrung gelangt ein Ölförderstrom (weitere Einzelheiten hierzu in der Figur 2) zwischen die motorseitige Gehäuseschale 2 und einem Kolben 9. Der Kolben 9 ist mit einer inneren Dichtung 24 gegenüber der Eingangswelle 10 und mit einer äußeren Dichtung 24 gegenüber einer Ringschale 27 abgedichtet. Die Ringschale 27 ist mit der motorseitigen Gehäuseschale 2 - beispielsweise mittels Laserschweißen - verbunden. Wird nun ein Öldruck zwischen der motorseitigen Gehäuseschale 2 und dem Kolben 9 aufgebaut, so drückt der Kolben 9 mittelbar auf die Lamellen 8, da der Kolben auf eine Kröpfung des Lamellenträger 14 einwirkt. Mit zunehmendem Druck des Kolbens 9 wird das Reibmoment in den Kupplungen schließlich derart erhöht, dass das volle Motormoment und die Motordrehzahl auf die Getriebe-Eingangswelle 10 übertragen wird.

Damit ohne einen weiteren Ölkanal auch ÖI über die Lamellen 8 geleitet werden kann, weist der Kolben 9 eine Drosselstelle 20 auf, die beispielsweise als Ausstanzung ausgebildet sein kann. Durch diese Drosselstelle 20 bleibt der Öldruck links von dem Kolben 9 im Wesentlichen aufrecht erhalten und dennoch ist eine Ölkühlung für die Lamellen 8 realisierbar.

Damit das der Nasskupplung zugeführte Öl vor einer Überhitzung wieder zur Pumpe 12 zurückgeführt werden kann, sind in diesem Ausführungsbeispiel zwei Rückführeinrichtungen 19 a, 19 b angeordnet, die von einer Stützhülse 26 gehalten werden. Diese Stützhülse 26 kann beispielsweise - ähnlich dem Trägerrohr für das Leitrad bei Drehmomentwandlern - an einer Getriebewandlung angebracht sein.

Mit der Figur 2 sollen - wie bereits angesprochen - die Ölkreisläufe der Nasskupplung erläutert werden. Ein von der Ölförderpumpe 12 kommender Ölstrom wird über die hohle Getriebe-Eingangswelle 10 in dem Bereich zwischen der getriebeseitigen Gehäuseschale 2 und dem Kolben 9 gefördert. Damit wird zum einen die Kolbenkraft aufgebaut und zum anderen über die Drosselstelle 20 ein Ölstrom für die Lamellen 8 realisiert. Damit möglichst über alle Reibflächen der Lamellen 8 eine gute Ölversorgung möglich ist, weisen sowohl der Lamellenträger 14, als auch der Lamellenträger 15 eine Vielzahl von radialen Durchbrüchen auf. Die Figur 2 darf also nicht dahingehend missverstanden werden, dass der Ölstrom nur - wie der Pfeil andeutet - über mittlere Reibflächen des Lamellenpakets geleitet wird. Nach dem Austreten des Lamellen-Ölstromes gelangt das Öl - bedingt durch die aus der Drehbewegung der Nasskupplung resultierende Fliehkraft - in den radial äußeren Bereich des Gehäuses 1 und schmiert dort Relativbewegungen der Dämpfungsfeder 13 mit der Gleitrinne 25.

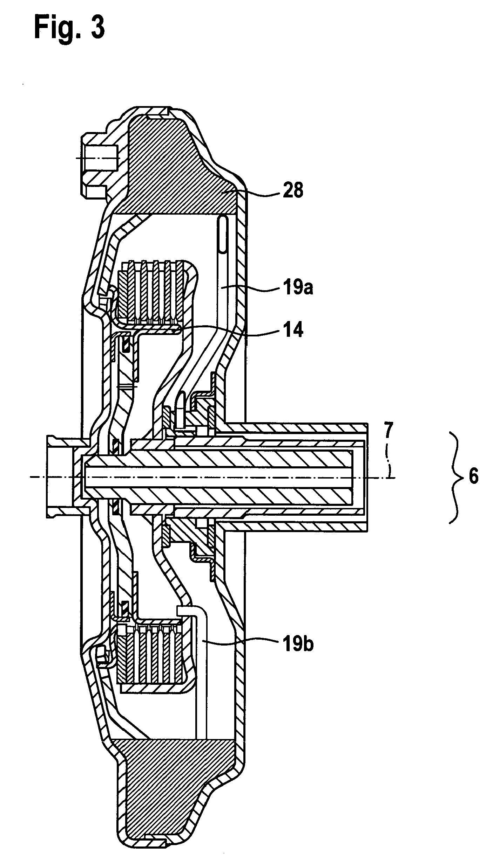

Durch die Fliehkraft bildet sich in dem radial äußeren Bereich der Nasskupplung ein Ölring 28 aus, wie in der Figur 3 dargestellt. Mittels der zu der Rotationsachse 7 spiralförmig angeordneten Rückführeinrichtungen 19 a, 19 b, die als Schöpfrohre ausgebildet sind, wird dann das Öl entweder in den Bereich der konzentrischen Öffnung 6 oder im Wesentlichen zu dem Innendurchmesser des Lamellenträger 14 gefördert. Die hier dargestellten Rückführeinrichtungen 19 a, 19 b sind deshalb spiralförmig ausgeführt, weil der rotierende Ölring 28 durch seine kinetische Energie auf die radial außen angeordneten und nicht rotierenden Eintrittsöffnungen trifft, wodurch das ÖI dann weiter nach radial innen "geschraubt" wird.

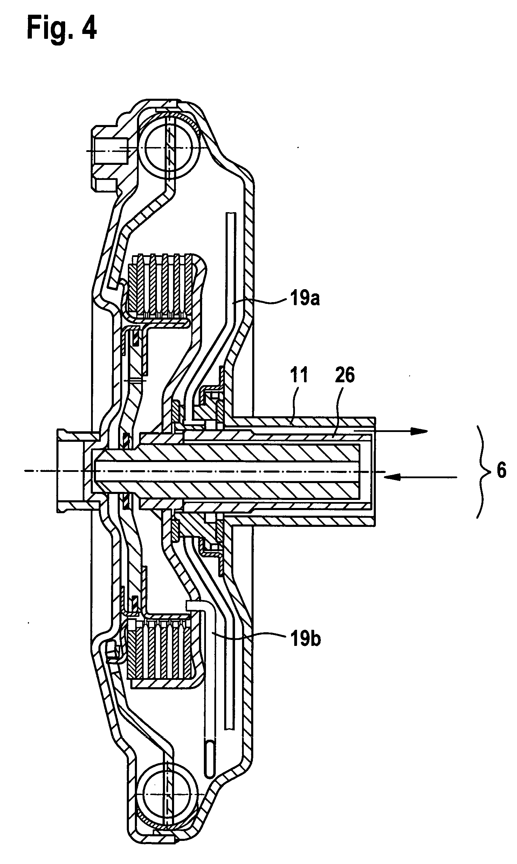

Mit der Figur 4 wird eine weitere Ausgestaltung der Rückführeinrichtung 19 a, 19 b offenbart. Diese Rückführeinrichtung 19 a, 19 b besteht aus zwei parallelen Scheiben, die zueinander einen ringförmigen Kanal bilden. An ihrem äußeren Durchmesser bilden diese Scheiben eine Eintrittsöffnung für das ÖI, welches zwischen dem Pumpenhals 11 und der Stützhülse 26 zurück gefördert werden soll. Dieses funktioniert in der Weise, weil in der Nasskupplung schließlich auch Luft eingeschlossen ist und deshalb durch das Nachströmen von neuem ÖI, sich das überschüssige ÖI zwischen den Scheiben der Rückführeinrichtung 19 a hinaus presst.

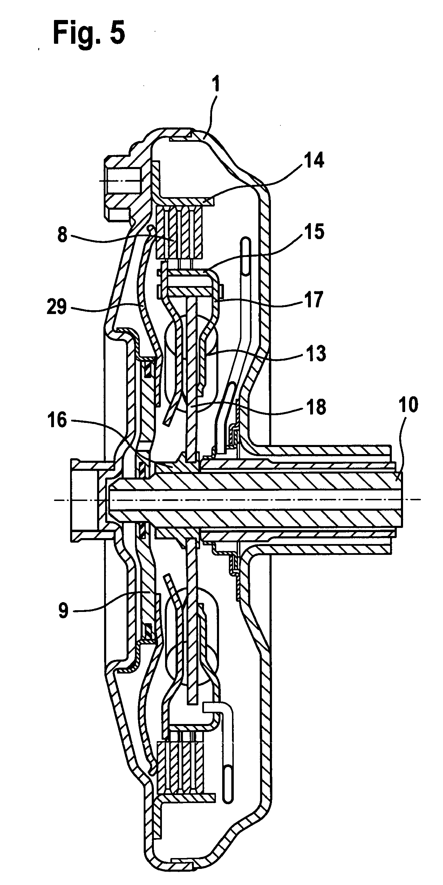

Der mit der Figur 5 gezeigte Dämpfer weist einen anderen Aufbau auf, als der Dämpfer aus den Figuren 1 bis 4. In der Figur 5 sind die Federn 13 in dem Kraftfluss von dem Gehäuse 1 zur Nabe 16 den Lamellen 8 nachgeordnet. Dieses heißt, dass der innere Lamellenträger 15 auf ein Eingangsteil 17 einwirkt. Dieses Eingangsteil 17 wiederum wirkt auf das eine Ende der Federn, während das andere Ende der Federn an dem Ausgangsteil 18 anliegt. Da die Federn 13 in dieser Darstellung nicht direkt in der Schnittebene, sondern hinter der Schnittebene liegen, erscheinen sie als schräg liegende Zylinder. Dieses zylinderförmige Erscheinungsbild wird auch dadurch noch untermauert, dass die Federn 13 hier nicht bogenförmig - wie in den Figuren 1 bis 4 - sondern im Wesentlichen zylindrisch gestaltet sind. Es soll mit der Figur 5 gezeigt werden, dass die erfinderische Vorrichtung auch mit diesem Dämpfertyp ausgerüstet sein kann.

Hervorzuheben ist bei dem Ausführungsbeispiel der Figur 5, dass der Kolben 9 wiederum nicht unmittelbar auf die Lamellen 8 drückt und auch nicht mittelbar über einen Lamellenträger 14, 15 auf die Lamellen 8 einwirkt, sondern dass ein zusätzliches Bauteil 29 - beispielsweise als Druckplatte oder Tellerfeder ausgestaltet - die Druckkraft des Kolbens 9 auf die Lamellen 8 ausübt.

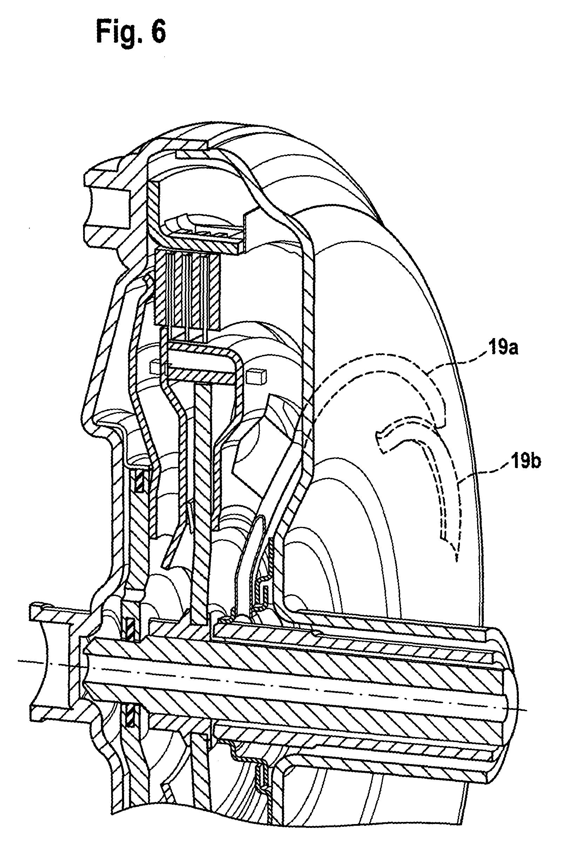

Die Figur 6 ist als Ergänzung zur Figur 5 zu sehen, damit der spiralförmige Charakter der Rückführeinrichtungen 19 a und 19 b besser verdeutlicht werden kann.

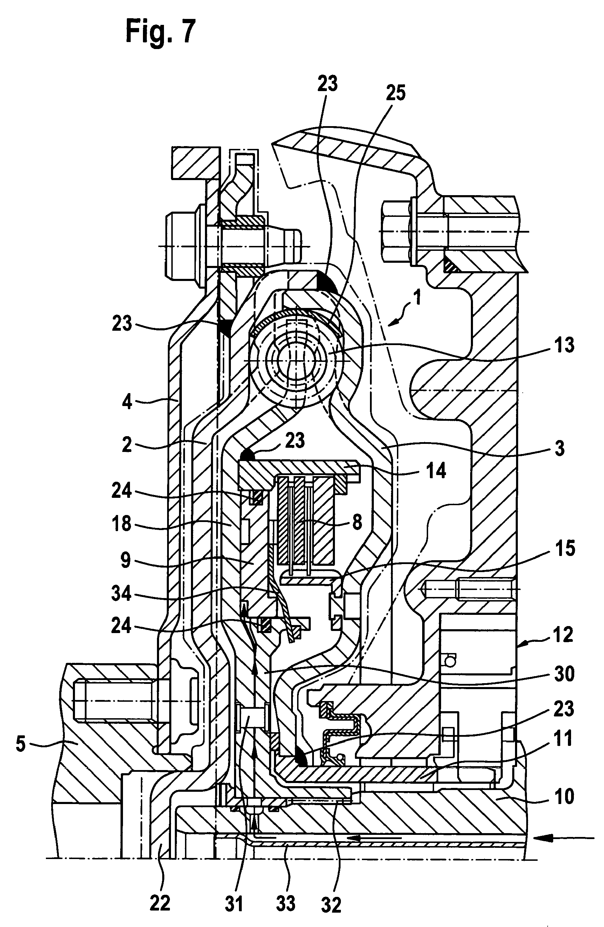

Die mit der Figur 7 gezeigte Ausgestaltung der erfinderischen Vorrichtung stellt einen einstellbaren Torsionsdämpfer dar. Auch kann wieder festgestellt werden, dass dieser Dämpfer als Substitut für einen Drehmomentwandler angesehen werden kann, denn seine Befestigung erfolgt wie beim Drehmomentwandler mittels einer Antriebsscheibe 4 (hier als Flex-Plate) mit der Antriebswelle/ Kurbelwelle 5 und ein Abtrieb erfolgt über das Vielzahnprofil 32 in die Getriebe-Eingangswelle 10. Auch der Pumpenhals 11 ist mit dem Drehmomentwandler gemeinsam, der hier ebenfalls in eine Ölförderpumpe 12 eingreift. Die nicht näher bezeichneten Umrisse auf der rechten Seite der Figur zeigen die motorseitige Außenwand eines Getriebes. Damit ist auch dieser einstellbare Torsionsdämpfer in dem Kraftfluss zwischen Verbrennungsmotor und einem Getriebe - vorzugsweise einem Automatikgetriebe - angeordnet.

Wie der Zeichnung zu entnehmen ist, erfolgt hier der Kraftfluss über das Gehäuse 1 und angedeuteten Mitnehmern (gestrichelte Linien) auf das eine Ende der Federn 13. Die Federn 13 sind hier übrigens zweilagig angeordnet. Das heißt, dass in einer äußeren Feder 13 zugleich auch noch eine innere Feder 13 angeordnet ist. Auch hier sind die Federn 13 im radial äußeren Bereich des Torsionsdämpfers angeordnet und gleiten auf einer Gleitrinne 25. Das Ausgangsteil 18 wirkt auf das andere Ende der Federn ein. Die Anordnung der Lamellenträger 14, 15 und somit der Lamellen 8 stellt in dieser Konstruktion eine Besonderheit dar, denn der äußere Lamellenträger 14 ist mittels einer Schweißnaht 23 mit dem Ausgangsteil 18 verbunden. Da der innere Lamellenträger 15 mit der getriebeseitigen Gehäuseschale 3 mittels einer Nietwarzen-Verbindung verbunden ist, wäre beim Zusammenfahren der Lamellen 8 (indem der Kolben 9 auf sie einwirkt) eine Relativdrehbewegung zwischen dem Ausgangsteil 18 und dem Gehäuse nicht mehr möglich. Mit anderen Worten: Der Kraftfluss wäre dann über das Gehäuse 1, über die Lamellenträger 14, 15 und die Lamellen 8 auf das Ausgangsteil 18. Ist der Kolben 9 aber nur schwach gegen die Lamellen 8 gepresst, so wird durch die Relativdrehbewegung des Ausgangsteiles 18 zu dem Gehäuse 1 nur teilweise abgefangen und in Wärmeenergie umgewandelt.

Betrachtet man den weiteren Kraftfluss in diesem Torsionsdämpfer, so erkennt man, dass durch eine Nietverbindung 31 ein zentrales Bauteil - eine Kolbenzentrierung 30 - mit dem Ausgangsteil 18 drehfest verbunden ist. Da an dem zentralen Bauteil, welches hier zugleich als Kolbenzentrierung 30 dient, zugleich auch ein Vielzahlprofil 32 angebracht ist, erfolgt hierüber eine drehfeste Verbindung zu der Getriebe-Eingangswelle 10.

Aus der Betrachtung der Dämpfung und damit der Umwandlung von Drehschwingungsenergie in Wärmeenergie folgt, dass bei nicht aufeinander gepressten Lamellen 8 und auch bei fest aufeinander gepressten Lamellen 8 (keine Relativdrehbewegung zwischen den Lamellen 8) keine Dämpfung stattfinden kann.

Da die Getriebe-Eingangswelle 10 hohl gestaltet ist, kann Öl mittels eines Einbaus 33 über eine radiale Bohrung zwischen dem Ausgangsteil 18 und der Kolbenzentrierung 30 gepumpt werden. Damit hier ein Ölfluss möglich ist - schließlich sind ja das Ausgangsteil 18 und die Kolbenzentrierung 30 mittels einer Nietverbindung 31 miteinander verbunden - sind in mindestens einem dieser Teile Ölführungsnuten vorhanden (beispielsweise durch Stanzen hergestellt). Auf diese Weise kann in die Kammer zwischen Ausgangsteil 18 und Kolben 9 Öl gepumpt werden. Lässt der Öldruck nach, so sorgt eine Rückholfeder 34 dafür, dass sich der Kolben wieder von den Lamellen 8 abhebt. (Nicht behandelte Bezugszeichen der Figur 7 haben die gleiche Bedeutung wie in den anderen Figuren.)

Der Figur 7 kann entnommen werden, dass der Einbau 33 nicht vollständig das Innere der Getriebe-Eingangswelle 10 ausfüllt. Somit ist ein zweiter Ölstrom denkbar, der hier am linken Ende der Getriebe-Eingangswelle 10 austritt und dann zwischen der motorseitigen Gehäuseschale 2 und dem Ausgangsteil 18 entlang strömt, um dann im Bereich der Federn 13 umgelenkt zu werden. Mittels entsprechender Rückführeinrichtungen 19 a, 19 b (wie eingangs bereits beschrieben) kann man das Öl auch über die Lamellen 8 fördern. In dem Spalt zwischen dem Pumpenhals 11 und der Getriebe-Eingangswelle 10 könnte dann dieses der Kühlung dienende ÖI zurückfließen. Ein umgekehrter Kühlöl-Förderstrom wäre im Rahmen der Erfindung auch denkbar.

Abschließend soll festgestellt werden, dass in den Ausführungsbeispielen der Figuren 1 bis 7 stillschweigend von einem Zweikanal-Ölfördersystem ausgegangen wird. Da die beschriebenen Nasskupplungen und der Torsionsdämpfer aber als Substitut für Drehmomentwandler gedacht sind, es aber auch Drehmomentwandler gibt, die neben zwei Kanälen für ihre Ölzirkulation, auch einen dritten Kanal für das Betätigen der Wandlerüberbrückungskupplung verwenden, ist es im Rahmen der vorliegenden Erfindung auch denkbar, dass ein derartiges Dreikanalsystem hierfür Anwendung findet. Die Ausführungsbeispiele der Figuren 1 bis 7 wären dann sinngemäß diesem Anwendungsfall anzupassen.

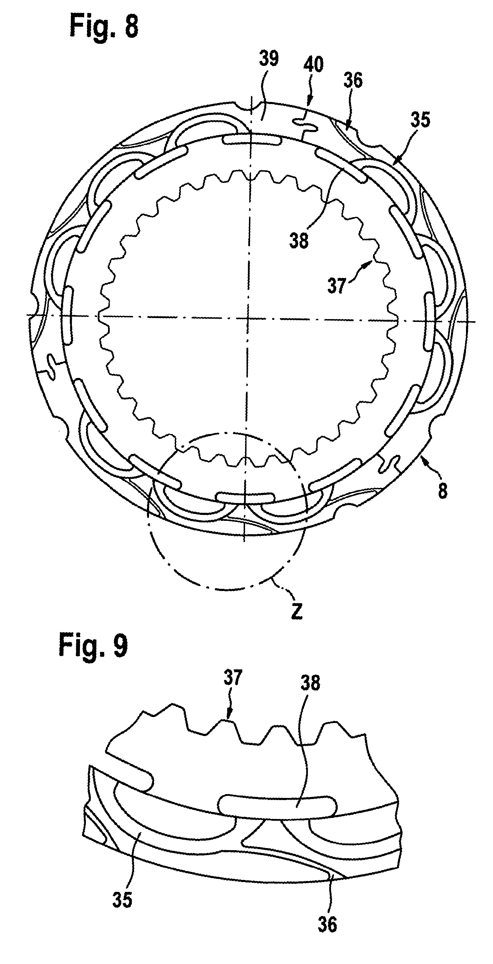

Mit den Figuren 8 und 9 (gleich Ausschnitt Z aus der Figur 8) wird eine Reiblamelle 8 gezeigt, die mittels ihrer Innenverzahnung 37 auf einem inneren Lamellenträger 14, 15 drehfest, aber axial verschiebbar angeordnet ist. Auf dem Trägermaterial der Lamelle 8 ist ein Reibbelag 39 ringförmig angeordnet. Der Reibbelag 39 besteht aus einzelnen Segmenten, die an einer S-förmigen Stosslinie 40 zusammengefügt sind. Das Trägermaterial der Lamelle 8 weist außerhalb des Reibbelag-Bereiches längliche Schlitze 38 auf, die einen axialen Ölfluss zulassen. In dem Reibbelag 39 sind Ölnuten 35, 36 vorhanden. Diese Ölnuten 35, 36 können beispielsweise in dem Reibbelag 39 eingeprägt sein. Vorteilhaft ist aber die besondere Anordnung und Form dieser Ölnuten 35, 36. Die Ölnuten 35 bilden einen Bogen, der am Innendurchmesser des Reibbelages 39 beginnt und dort auch wieder endet. Diese Ölnuten 35 sind von ihrer Querschnittfläche größer ausgestaltet als die Ölnuten 36, die im Wesentlichen unter einem spitzen Winkel auf den Bogen der Ölnuten 35 stoßen. Die Ölnuten 36 stellen zudem eine Fließverbindung zu dem Außendurchmesser des Reibbelages 39 her. Ihre Orientierung zur großen Ölnut 35 kann auch die andere Richtung weisen (also anders als dargestellt), je nachdem wie die Drehrichtung dieses Reibbelages zum Nachbar-Reibbelag ist und wie durch den Schlepp-Effekt das Öl von außen nach innen oder von innen nach außen gefördert werden soll.

### Bezugszeichenliste

- 1: Gehäuse
- 2: motorseitige Gehäuseschale
- 3: getriebeseitige Gehäuseschale
- 4: Antriebsscheibe
- 5: Antriebswelle/ Kurbelwelle
- 6: konzentrische Öffnung
- 7: Rotationsachse des Gehäuses
- 8: Lamellen/ Reiblamellen
- 9: Kolben
- 10: Getriebe-Eingangswelle
- 11: Pumpenhals
- 12: Ölförderpumpe
- 13: Dämpferfeder (Wendelfeder)
- 14: Lamellenträger
- 15: Lamellenträger
- 16: Nabe
- 17: Eingangsteil
- 18: Ausgangsteil
- 19: Rückführeinrichtung
- 20: Drosselstelle im Kolben
- 21: Befestigungsauge
- 22: Führungseinrichtung (Dorn oder Hülse)
- 23: Schweißnaht
- 24: Dichtung
- 25: Gleitrinne
- 26: Stützhülse
- 27: Ringschale
- 28: Ölring
- 29: Druckplatte/ Tellerfeder
- 30: Kolbenzentrierung
- 31: Nietverbindung
- 32: Vielzahlprofil
- 33: Einbau
- 34: Rückholfedern
- 35: Ölnut
- 36: Ölnut
- 37: Innenverzahnung der Lamelle
- 38: Schlitz
- 39: Reibbelag
- 40: Stosslinie

## Patentansprüche

**1.** Vorrichtung zum Wirkverbinden eines Verbrennungsmotor in Kraftfahrzeugen mit einem nachfolgenden Getriebes mit den folgenden Merkmalen:
- die Vorrichtung besitzt ein umhüllendes Gehäuse (1), welches zumindest teilweise mit ÖI gefüllt ist;
- das Gehäuse (1) besteht im Wesentlichen aus einer motorseitigen (2) und einer getriebeseitigen Gehäuseschale (3), die an ihrer Stoßstelle öldicht miteinander verbunden sind;
- die motorseitige Gehäuseschale (2) ist mittels einer Antriebsscheibe (4) mit einer Antriebswelle/ Kurbelwelle (5) des Verbrennungsmotors drehfest verbunden;
- über eine konzentrische Öffnung (6) in der getriebeseitigen Gehäuseschale (3) greift eine Getriebe-Eingangswelle (10) des nachgeordneten Getriebes ein;
- die Getriebe-Eingangswelle (10) ist drehfest mit einer im Innern des Gehäuses (1) befindlichen Nabe (16) verbunden;
- die Vorrichtung ist hydraulisch mit einer Ölförderpumpe (12) verbunden, die außerhalb des Gehäuses (1) angeordnet ist;
- in dem Gehäuse (1) ist weiterhin ein Kolben (9) vorhanden, der zur Rotationsachse (7) des Gehäuses (1) konzentrisch angeordnet und axial verlagerbarer ist;
- in dem Kraftfluss zwischen dem Gehäuses (1) und der Nabe (16) sind Reiblamellen (8) angeordnet, die mittels des Kolbens (9) - zumindest mittelbar - aufeinander gepresst werden können, wodurch der Kraftfluss zwischen Gehäuse (1) und Getriebe-Eingangswelle (10) beeinflusst wird.

**2.** Vorrichtung nach Anspruch 1, **dadurch gekennzeichnet, dass** die getriebeseitige Gehäuseschale (3) im Bereich der Öffnung (6) mit einem Pumpenhals (11) versehen ist, der drehfest in eine getriebeseitige Ölförderpumpe (12) eingreift, wobei zumindest ein Teil dieses Ölstromes in die Vorrichtung gefördert wird.

**3.** Vorrichtung nach Anspruch 1, **dadurch gekennzeichnet, dass** eine Ölversorgung für die Vorrichtung mittels einer elektromotorisch betätigten Ölförderpumpe (12) bewerkstelligt wird.

**4.** Vorrichtung nach Anspruch 3, **dadurch gekennzeichnet, dass** die Leistung der elektromotorisch betätigten Ölpumpe (12) unabhängig von der Drehzahl des Verbrennungsmotors ist.

**5.** Vorrichtung nach Anspruch 4, **dadurch gekennzeichnet, dass** die Leistung der elektromotorisch betätigten Ölpumpe (12) in Abhängigkeit von der Öltemperatur des aus der Vorrichtung abfließenden Öles betrieben wird.

**6.** Vorrichtung nach einem der Ansprüche 1 bis 5, **dadurch gekennzeichnet, dass** die Antriebsscheibe (4) als Schwungrad ausgebildet ist.

**7.** Vorrichtung nach einem der Ansprüche 1 bis 5, **dadurch gekennzeichnet, dass** die Antriebsscheibe (4) als flexible Scheibe ausgebildet ist.

**8.** Vorrichtung nach einem der Ansprüche 1 bis 7, **dadurch gekennzeichnet, dass** die Vorrichtung als Nasskupplung ausgebildet ist.

**9.** Vorrichtung nach Anspruch 8, **dadurch gekennzeichnet, dass** die Nasskupplung mit einem Torsionsdämpfer ausgestattet ist, dessen Federn (13) als Wendelfedern ausgebildet sind.

**10.** Vorrichtung nach Anspruch 9, **dadurch gekennzeichnet, dass** der Kraftfluss in der Nasskupplung wie folgt aufgebaut ist:
- Mitnehmer an der Innenseite des Gehäuses (1) stützen das eine Ende der Federn (13) ab;
- das andere Ende der Federn (13) stützt sich an einem Ausgangsteil (18) ab, welches ringförmig gestaltet ist;
- das Ausgangsteil (18) ist mit einem ersten - axial verlagerbaren - Lamellenträger (14, 15) verzahnt;
- dieser erste Lamellenträger (14, 15) ist wiederum mit einem Teil der Lamellen (8) - axial verlagerbar - verzahnt;
- ein zweiter Lamellenträger (14, 15) ist mit den axial verlagerbaren Lamellen (8) verzahnt, die nicht mit dem ersten Lamellenträger (14, 15) verzahnt sind;
- der zweite Lamellenträger (14, 15) ist mit der Nabe (16) verbunden.

**11.** Vorrichtung nach Anspruch 9, **dadurch gekennzeichnet, dass** der Kraftfluss in der Nasskupplung wie folgt aufgebaut ist:
- ein erster Lamellenträger (14, 15) ist mit der Innenseite des Gehäuses (1) verbunden;
- dieser erste Lamellenträger (14, 15) ist wiederum mit einem Teil der Lamellen (8) - axial verlagerbar - verzahnt;
- ein zweiter Lamellenträger (14, 15) ist mit den axial verlagerbaren Lamellen (8) verzahnt, die nicht mit dem ersten Lamellenträger (14, 15) verzahnt sind;
- der zweite Lamellenträger (14, 15) ist mit einem Eingangsteil (17) des Dämpfers verbunden;
- dieses Eingangsteil (17) wirkt auf das eine Ende der Federn (13);
- das andere Ende der Federn (13) wirkt auf ein Ausgangsteil (18);
- dieses Ausgangsteil (18) ist mit der Nabe (16) verbunden.

**12.** Vorrichtung nach Anspruch 8 bis 11, **dadurch gekennzeichnet, dass** zur Unterstützung des Ölrückflusses in dem Gehäuse (1), eine Rückführeinrichtung (19 a, 19 b) angeordnet ist.

**13.** Vorrichtung nach Anspruch 12, **dadurch gekennzeichnet, dass** die Rückführeinrichtung (19 a, 19 b) durch mindestens ein spiralförmiges Schöpfrohr verkörpert ist.

**14.** Vorrichtung nach Anspruch 13, **dadurch gekennzeichnet, dass** das Schöpfrohr zwischen dem radial äußeren Bereich und der zentralen Öffnung (6) angeordnet ist.

**15.** Vorrichtung nach Anspruch 13, **dadurch gekennzeichnet, dass** das Schöpfrohr zwischen dem radial äußeren Bereich und im Wesentlichen dem Innendurchmesser der Reiblamellen (8) angeordnet ist.

**16.** Vorrichtung nach Anspruch 12, **dadurch gekennzeichnet, dass** die Rückführeinrichtung (19 a, 19 b) aus einem im Wesentlichen parallelen Scheibenpaar besteht und das Öl aus dem radial äußeren Bereich zur zentralen Öffnung (6) des Gehäuses (1) befördert.

**17.** Vorrichtung nach einem der Ansprüche 1 bis 16, **dadurch gekennzeichnet, dass** der Kolben (9) mit einer Drosselstelle (20) versehen ist.

**18.** Vorrichtung nach einem der Ansprüche 1 bis 7, **dadurch gekennzeichnet, dass** die Vorrichtung als Torsionsdämpfer ausgebildet ist, wobei der Torsionsdämpfer mit Wendelfedern (13) realisiert wird.

**19.** Vorrichtung nach Anspruch 18, **dadurch gekennzeichnet, dass** der Kraftfluss in dem Torsionsdämpfer wie folgt aufgebaut ist:
- Mitnehmer an der Innenseite des Gehäuses (1) stützen das eine Ende der Federn (13) ab;
- das andere Ende der Federn (13) stützt sich an einem Ausgangsteil (18) ab, welches auch zugleich mit der Nabe (16) drehfest verzahnt ist;
- das Ausgangsteil (18) ist mit einem ersten Lamellenträger (14, 15) verzahnt;
- dieser erste Lamellenträger (14, 15) ist wiederum mit einem Teil der Lamellen (8) - axial verlagerbar - verzahnt;
- ein zweiter Lamellenträger (14, 15) ist mit den axial verlagerbaren Lamellen (8) verzahnt, die nicht mit dem ersten Lamellenträger (14, 15) verzahnt sind;
- der zweite Lamellenträger (14, 15) ist wiederum mit dem Gehäuse (1) verbunden.

**19.** Vorrichtung nach einem der Ansprüche 18 oder 19, **dadurch gekennzeichnet, dass** durch Erhöhung der Druckkraft auf den Kolben (9), die Reibungskraft zwischen den Lamellen (8) - mit dem Wert Null beginnend - auf einen Wert erhöht werden kann, bis schließlich der Kraftfluss von dem Gehäuse (1), über die Lamellen (8), dem ersten und dem zweiten Lamellenträger (14, 15), mit dem Ausgangsteil (18) erfolgt.

**20.** Reibbelag (39) für Lamellen (8) in einer Wirkverbindung zwischen einem Verbrennungsmotor eines Kraftfahrzeuges und einem Getriebe, **dadurch gekennzeichnet, dass** erste Ölnute (35) vorhanden sind, die bogenförmig den Innenrand des Reibbelages (39) mit dem Innenrand des Reibbelages (39) verbinden und zugleich unter einem spitzen Winkel zweite Ölnute (36) von außen auf diese erste Ölnute (35) stoßen, wobei die zweiten Ölnuten (36) zugleich mit dem Außenrand des Reibbelages (39) in Fließverbindung stehen.

**21.** Reibbelag (39) nach Anspruch 20, **dadurch gekennzeichnet, dass** die zweiten Ölnuten (36) von ihrem Querschnitt her kleiner sind als die ersten Ölnuten (35).

**22.** Reibbelag (39) nach Anspruch 20, **dadurch gekennzeichnet, dass** mindestens die ersten Ölnuten (35) oder die zweiten Ölnuten (36) sich in Fließrichtung des Öles verjüngen.

**23.** Reibbelag (39) nach Anspruch 22, **dadurch gekennzeichnet, dass** die Verjüngung der Ölnuten (35, 36) über die Breite und/oder die Tiefe der Ölnuten (35, 36) erfolgt
